# FASCICULE DE BREVET EUROPEEN

(11) **EP 4 251 662 B1**
(45) Date de publication et mention de la délivrance du brevet: **01.01.2025**
(21) Numéro de dépôt: 21823968.9
(22) Date de dépôt: 19.11.2021
(51) Int. Cl.: C08F 210/02, C08F 236/06, C08F 4/54, C08F 4/52

(54) **POLYMÈRES TÉLÉCHÉLIQUES À BASE D'ÉTHYLÈNE ET DE 1,3-DIÈNE**
TELECHELE POLYMERE AUF BASIS VON ETHYLEN UND 1,3-DIEN
TELECHELIC POLYMERS BASED ON ETHYLENE AND 1,3 DIENE

(30) Priorité: 24.11.2020 FR 2012083
(43) Date de publication de la demande: 04.10.2023
(73) Titulaire: COMPAGNIE GENERALE DES ETABLISSEMENTS MICHELIN, 63000 Clermont-Ferrand (FR); Centre National de la Recherche Scientifique, 75794 Paris Cedex 16 (FR); Ecole Superieure de Chimie, Physique, Electronique de Lyon, 69616 Villeurbanne (FR); Université Claude Bernard Lyon 1, 69622 Villeurbanne Cedex (FR)
(72) Inventeur: NGO, Robert, 63040 CLERMONT-FERRAND Cedex 9 (FR); BAULU, Nicolas, 63040 CLERMONT-FERRAND Cedex 9 (FR); BOISSON, Christophe, 01390 TRAMOYES (FR); D'AGOSTO, Franck, 69740 GENAS (FR); JEAN-BAPTISTE-DIT-DOMINIQUE, François, 63040 CLERMONT-FERRAND Cedex 9 (FR); THUILLIEZ, Julien, 63040 CLERMONT-FERRAND Cedex 9 (FR)
(74) Mandataire: M.F.P. Michelin
(86) Numéro de dépôt international: PCT/FR2021/052046
(87) Numéro de publication internationale: WO 2022/112693

(56) Documents cités:
- WO-A1-2004/035639
- WO-A1-2018/224774
- FR-A1- 3 044 663

## Description

Le domaine de la présente invention est celui des copolymères à base d'éthylène et de 1,3-diène téléchéliques.

Des copolymères d'éthylène et de 1,3-diène sont largement décrits. Ils sont généralement obtenus par polymérisation catalytique de l'éthylène et d'un 1,3-diène en présence d'un métallocène et d'un co-catalyseur. Dans les documents EP 1 092 731, WO 2004035639, WO 2007054224, WO 2018224776 et FR 3 044 663, les copolymères d'éthylène et de 1,3-diène ont la particularité de présenter une microstructure originale, puisqu'ils contiennent aussi des motifs cycliques à 6 membres résultant d'une insertion très particulière de l'éthylène et du 1,3-butadiène. Cette microstructure originale est également observée dans des terpolymères à base d'éthylène, de 1,3-butadiène et d'un autre monomère, comme cela est décrit par exemple dans le document WO2020128196 A1.

Dans la synthèse de ces polymères, le co-catalyseur est un organolithien, un organomagnésien ou un organoaluminique. Lorsque le co-catalyseur est un organomagnésien, il est typiquement un chlorure d'un organomagnésien ou un organomagnésien dans lesquels l'atome de magnésium est lié à deux groupes aliphatiques, comme le dibutylmagnésium, le butyléthylmagnésium et le butyloctylmagnésium.

Des copolymères d'éthylène et de 1,3-diène fonctionnels ont été également décrits. Ils sont obtenus par une réaction de fonctionnalisation subséquente à la réaction de polymérisation et mise en oeuvre par l'ajout d'un agent de modification généralement en fin de polymérisation. Cette première méthode permet la fonctionnalisation d'une seule extrémité de chaîne du polymère. Une alternative à cette première méthode a été de proposer d'utiliser des agents de transfert fonctionnels à la place des co-catalyseurs. Ces agents de transfert fonctionnels décrits dans les demandes de brevet WO2016092237 et WO2013135314 sont par exemple des organomagnésiens qui portent une fonction amine, éther ou vinyle. Cette alternative permet bien de supprimer l'étape supplémentaire de fonctionnalisation après la réaction de polymérisation pour former des polymères fonctionnels. Mais cette alternative conduit, comme la première méthode, à la fonctionnalisation d'une seule extrémité de chaîne du polymère, à moins de procéder à une étape supplémentaire de fonctionnalisation en fin de polymérisation.

La synthèse de copolymères d'éthylène et de 1,3-diène téléchéliques requiert donc de combiner les deux méthodes de fonctionnalisations décrites ci-dessus. Comme les chimies impliquées respectivement dans les deux méthodes de fonctionnalisation sont différentes, les groupes qui portent la fonction et qui relient la fonction à l'unité terminale de la chaîne polymère sont des groupes fonctionnels différents, quand bien même la fonction est identique aux deux extrémités. En d'autres termes, le groupe fonctionnel porté par une extrémité d'une chaîne n'est pas rigoureusement identique au groupe fonctionnel porté par l'autre extrémité de la chaîne.

Or il peut être d'intérêt de disposer de copolymères d'éthylène et d'un 1,3-diène portant en extrémités de chaîne polymère des groupes fonctionnels rigoureusement identiques, par exemple pour l'obtention de polymères dont les extrémités de chaîne sont de réactivité identique, voire pour l'obtention de polymères parfaitement symétriques, sans hétérogénéité de structure et de réactivité. Des homopolymères ou copolymères du 1,3-butadiène fonctionnalisés aux deux extrémités de chaîne par des groupes identiques et partiellement hydrogénés ont été décrits dans la demande de brevet EP1314744 A2. L'introduction des groupes fonctionnels aux deux extrémités de chaîne est réalisée grâce à l'utilisation d'un amorceur dilithié dans un mécanisme de polymérisation anionique. Le polymère fonctionnel ainsi synthétisé a une macrostructure et une microstructure qui découlent de celles d'un polymère synthétisé par polymérisation anionique. Il s'ensuit qu'une distribution moléculaire relativement étroite du polymère fonctionnel peut être obtenue, mais les microstructures du polymère fonctionnel sont uniquement celles accessibles par polymérisation anionique.

Des copolymères de propylène et de 1,3-butadiène fonctionnalisés aux deux extrémités de chaîne par des groupes identiques, en l'espèce vinyles, sont également décrits par exemple dans le document WO200827269 A2. L'introduction des groupes fonctionnels aux extrémités du polymère est réalisée par réaction de dégradation d'un copolymère de propylène et de 1,3-butadiène en présence d'éthylène. En raison du mécanisme réactionnel de dégradation de la chaîne polymère par métathèse, la distribution moléculaire du polymère fonctionnel est large et les masses moléculaires moyennes en nombre relativement faibles.

Les Demanderesses ont mis au point un nouveau copolymère à base d'éthylène et d'un 1,3-diène qui porte à chacune de ses extrémités un groupe fonctionnel identique. Il a l'avantage de présenter à la fois les caractéristiques de la macrostructure d'un polymère obtenu par polymérisation anionique et les caractéristiques de la microstructure d'un polymère obtenu par polymérisation catalytique.

Ainsi, l'invention concerne un polymère téléchélique de formule (I)

Z₁-POLY-Z₂ (I)

dans laquelle la dénomination « POLY» désigne une chaîne polymère comprenant des unités d'un 1,3-diène, des unités d'éthylène et des unités cycliques, unités 1,2-cyclohexane de formule (II), 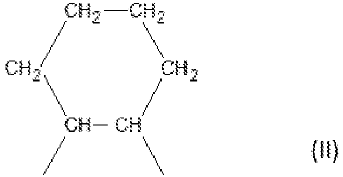
Z₁ et Z₂ désignant un groupe contenant une fonction,
Z₁ et Z₂ étant identiques,
lequel polymère présente une macrostructure définie par une dispersité inférieure à 1.5 ou par une masse molaire moyenne en nombre supérieure à 10 000 g/mol.

### Description

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Par l'expression « à base de » utilisée pour définir les constituants d'un système catalytique ou d'une composition, on entend le mélange de ces constituants, ou le produit de la réaction d'une partie ou de la totalité de ces constituants entre eux.

Sauf indication contraire, les taux des unités résultant de l'insertion d'un monomère dans un copolymère sont exprimés en pourcentage molaire par rapport à la totalité des unités monomères qui constituent le polymère.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage.

Le polymère selon l'invention a pour caractéristique essentielle de comprendre une chaîne polymère, dénommée POLY, qui comprend des unités éthylène. De manière connue, on entend par unité éthylène une unité qui a pour motif-(CH₂-CH₂)-. Préférentiellement, la chaîne polymère contient plus de 50% en mole d'unités éthylène.

La chaîne polymère contient des unités d'un 1,3-diène. De manière connue, un 1,3-diène peut s'insérer dans une chaîne polymère en croissance par une insertion 1,4 ou 2,1 ou encore 3,4 dans le cas de diène substitué comme l'isoprène pour donner lieu respectivement à la formation d'unité du 1,3-diène de configuration 1,4, d'unité du 1,3-diène de configuration 1,2 ou de configuration 3,4. De préférence, les unités du 1,3-diène sous la configuration 1,2 et les unités du 1,3-diène sous la configuration 3,4 représentent plus de 50% en mole des unités du 1,3-diène.

Selon l'invention, le 1,3-diène dont les unités monomères sont constitutives de la chaîne polymère POLY est un seul composé, c'est-à-dire un seul (en anglais « one ») 1,3-diène ou est un mélange de 1,3-diènes qui se différencient les uns des autres par la structure chimique. Peut convenir tout 1,3-diène polymérisable par voie catalytique. On peut citer par exemple les 1,3-diènes ayant 4 à 20 atomes de carbone. Le 1,3-diène est de préférence le 1,3-butadiène ou un mélange de 1,3-diènes dont un est le 1,3-butadiène.

Selon l'invention, la chaîne polymère contient des motifs cycliques à 6 membres qui répondent à la formule (II)

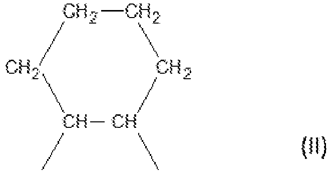

La présence de ces structures cycliques dans la chaîne polymère résulte d'une insertion très particulière de l'éthylène et de 1,3-butadiène lors de leur copolymérisation, comme décrit par exemple dans le document Macromolecules 2009, 42, 3774-3779. De préférence, la chaîne polymère contient au plus 15% en mole d'unité 1,2-cyclohexane. La teneur en unités 1,2-cyclohexane dans la chaîne polymère varie selon les teneurs respectives en éthylène et en 1,3-butadiène dans la chaîne polymère. La chaîne polymère contient généralement moins de 10% en mole d'unité 1,2-cyclohexane pour les taux les plus élevés en éthylène dans le polymère et peut en contenir plus de 10% pour les taux les plus faibles en éthylène dans le polymère, par exemple jusqu'à 15%.

Selon une première variante de l'invention, la chaîne polymère dénommée « POLY » est une chaîne copolymère du 1,3-diène et d'éthylène. En d'autres termes, les unités monomères de la chaîne polymère représentée par la dénomination « POLY » sont des unités résultant de la copolymérisation de l'éthylène et du 1,3-diène.

Selon une deuxième variante de l'invention, la chaîne polymère dénommée « POLY » est une chaîne terpolymère du 1,3-diène, d'éthylène et d'une α-monooléfine. On entend par α-monooléfine une α-oléfine qui a une seule double liaison carbone-carbone, les doubles liaisons dans les composés aromatiques n'étant pas prises en compte. Par exemple, le styrène est considéré comme une α-monooléfine. Dans la deuxième variante, la chaîne polymère représentée par la dénomination « POLY » contient un termonomère, monomère autre que l'éthylène et le 1,3-diène et les unités monomères de la chaîne polymère représentée par la dénomination « POLY » sont des unités résultant de la terpolymérisation de l'éthylène, du 1,3-diène et de l'α-monooléfine. Le termonomère est une α-monooléfine, de préférence une α-monooléfine aromatique. A titre d'α-monooléfines aromatiques, on peut citer les monoléfines substituées en alpha de la double liaison par un groupe phényle, substitué ou non, telles que le styrène, les styrènes substitués par un ou plusieurs groupes alkyles en para, méta ou ortho ou leurs mélanges. Le termonomère est avantageusement le styrène.

De préférence, la chaîne polymère est une chaîne copolymère statistique, auquel cas la dénomination POLY représente une chaîne polymère dans laquelle les unités monomères sont réparties de façon statistique, en raison d'une incorporation statistique des monomères dans la chaîne polymère en croissance.

Les groupes fonctionnels représentés par les symboles Z₁ et Z₂ sont des groupes qui contiennent une fonction. Ils ont pour caractéristique essentielle d'être identiques. Chacun des groupes fonctionnels représentés respectivement par Z₁ et Z₂ a aussi pour caractéristique essentielle de partager une liaison covalente avec l'un des atomes de carbone de l'unité monomère en extrémité de chaîne. A titre de fonction, on peut citer la fonction alcool, amine, halogène, carbonyle telle qu'ester, alcoxysilane, silanol. Le groupe fonctionnel contient préférentiellement une fonction alcool, amine, halogène, carbonyle telle qu'ester, alcoxysilane ou silanol.

Le polymère téléchélique selon l'invention a aussi pour caractéristique essentielle une macrostructure particulière, puisqu'il présente au moins l'une des caractéristiques suivantes qui sont une dispersité inférieure à 1.5 et une masse molaire moyenne en nombre supérieure à 10 000 g/mol. De manière connue, la dispersité est le rapport entre la masse molaire moyenne en masse du polymère (notée conventionnellement Mw) et la masse molaire moyenne en nombre (notée conventionnellement Mn) du polymère.

Selon une variante, la macrostructure est définie par une masse molaire moyenne en nombre supérieure à 10 000 g/mol, préférentiellement supérieure à 20 000 g/mol. Selon cette variante, la macrostructure est définie préférentiellement à la fois par une masse molaire moyenne en nombre supérieure à 10 000 g/mol et une dispersité inférieure à 1.5, plus préférentiellement par une masse molaire moyenne en nombre supérieure à 20 000 g/mol et une dispersité inférieure à 1.5.

Selon une autre variante, la macrostructure est définie par une dispersité inférieure à 1.5. Selon cette variante, les masses molaires moyennes en nombre peuvent varier dans une large mesure, en particulier elles peuvent être inférieures à 10 000 g/mol.

Le polymère téléchélique selon l'invention peut être synthétisé par un procédé de polymérisation catalytique en présence d'un système catalytique à base au moins d'un métallocène et d'un co-catalyseur. Par l'expression « à base de » utilisée pour définir les constituants du système catalytique, on entend le mélange de ces constituants, ou le produit de la réaction d'une partie ou de la totalité de ces constituants entre eux.

Dans la présente demande, on entend par métallocène un complexe organométallique dont le métal, en l'espèce l'atome de terre rare, est lié à deux groupes Cp³ et Cp⁴ ou à une molécule de ligand constitué de deux groupes Cp¹ et Cp² reliés entre eux par un pont P. Ces groupes Cp¹, Cp², Cp³ et Cp⁴, identiques ou différents, sont choisis dans le groupe constitué par les groupes fluorényles, les groupes cyclopentadiényles et les groupes indényles, ces groupes pouvant être substitués ou non substitués. On rappelle que les terres rares sont des métaux et désignent les éléments scandium, yttrium et les lanthanides dont le numéro atomique varie de 57 à 71.

Selon une première variante de l'invention, le métallocène utilisé comme constituant de base dans le système catalytique répond à la formule (IIIa)

{P(Cp¹)(Cp²)Y} (IIIa)

dans laquelle
Y désigne un groupe comportant un atome de métal qui est une terre rare,
Cp¹ et Cp², identiques ou différents, sont choisis dans le groupe constitué par les groupes fluorényles, les groupes cyclopentadiényles et les groupes indényles, les groupes étant substitués ou non substitués,
P est un groupe pontant les deux groupes Cp¹ et Cp², et comprenant un atome de silicium ou de carbone.

Selon une deuxième variante de l'invention, le métallocène utilisé comme constituant de base dans le système catalytique conforme à l'invention répond à la formule (Illb)

Cp³Cp⁴Y (IIIb)

dans laquelle
Y désigne un groupe comportant un atome de métal qui est une terre rare,
Cp³ et Cp⁴, identiques ou différents, sont choisis dans le groupe constitué par les groupes fluorényles, les groupes cyclopentadiényles et les groupes indényles, les groupes étant substitués ou non substitués.

A titre de groupes cyclopentadiényles, fluorényles et indényles substitués, on peut citer ceux substitués par des radicaux alkyles ayant 1 à 6 atomes de carbone ou par des radicaux aryles ayant 6 à 12 atomes de carbone ou encore par des radicaux trialkylsilyles tels que SiMe₃. Le choix des radicaux est aussi orienté par l'accessibilité aux molécules correspondantes que sont les cyclopentadiènes, les fluorènes et indènes substitués, parce que ces derniers sont disponibles commercialement ou facilement synthétisables.

A titre de groupes fluorényles substitués, on peut citer ceux substitués en position 2,7, 3 ou 6, particulièrement le 2,7-ditertiobutyle-fluorényle, le 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

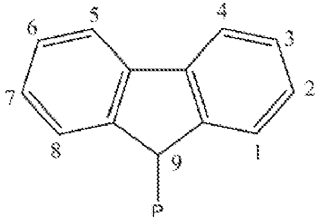

A titre de groupes cyclopentadiényles substitués, on peut citer particulièrement ceux substitués en position 2, plus particulièrement le groupe tétraméthylcyclopentadiènyle. La position 2 (ou 5) désigne la position de l'atome de carbone qui est adjacent à l'atome de carbone auquel est attaché le pont P, comme cela est représenté dans le schéma ci-après.

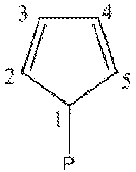

A titre de groupes indényles substitués, on peut citer particulièrement ceux substitués en position 2, plus particulièrement le 2-méthylindényle, le 2-phénylindényle. La position 2 désigne la position de l'atome de carbone qui est adjacent à l'atome de carbone auquel est attaché le pont P, comme cela est représenté dans le schéma ci-après.

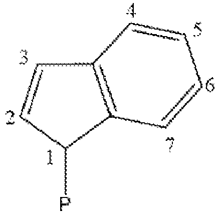

De préférence, le métallocène est de formule (IIIa).

De préférence, Cp¹ et Cp² sont identiques et sont choisis dans le groupe constitué par les groupes fluorényles substitués et le groupe fluorényle non substitué de formule C₁₃H₈. Avantageusement, Cp¹ et Cp² sont identiques et représentent chacun un groupe fluorényle non substitué de formule C₁₃H₈, représenté par le symbole Flu.

De préférence, le symbole Y représente le groupe Met-G, avec Met désignant un atome de métal qui est une terre rare et G désignant un groupe comprenant le motif borohydrure BH₄ ou désignant un atome d'halogène choisi dans le groupe constitué par le chlore, le fluor, le brome et l'iode.

Avantageusement, G désigne un atome de chlore ou le groupe de formule (IIIc) :

(BH₄)_{(1+y)-}L_{y}-Nₓ (IIIc)

dans laquelle
L représente un métal alcalin choisi dans le groupe constitué par le lithium, le sodium et le potassium,
N représente une molécule d'un éther,
x, nombre entier ou non, est égal ou supérieur à 0,
y, nombre entier, est égal ou supérieur à 0.

Très avantageusement, G désigne le groupe de formule (IIIc).

Comme éther convient tout éther qui a le pouvoir de complexer le métal alcalin, notamment le diéthyléther et le tétrahydrofurane.

Le métal du métallocène est de préférence un lanthanide dont le numéro atomique va de 57 à 71, de manière plus préférentielle le néodyme, Nd.

Le pont P reliant les groupes Cp¹ et Cp² répond de préférence à la formule ZR¹R², dans laquelle Z représente un atome de silicium ou de carbone, R¹ et R², identiques ou différents, représentent chacun un groupe alkyle comprenant de 1 à 20 atomes de carbone, de préférence un méthyle. Dans la formule ZR¹R², Z représente avantageusement un atome de silicium, Si.

Le métallocène utile à la synthèse du système catalytique peut se trouver sous la forme de poudre cristallisée ou non, ou encore sous la forme de monocristaux. Le métallocène peut se présenter sous une forme monomère ou dimère, ces formes dépendant du mode de préparation du métallocène, comme par exemple cela est décrit dans la demande de brevet WO 2007054224 ou WO 2007054223. Le métallocène peut être préparé de façon traditionnelle par un procédé analogue à celui décrit dans la demande de brevet WO 2007054224 ou WO 2007054223, notamment par réaction dans des conditions inertes et anhydres du sel d'un métal alcalin du ligand avec un borohydrure de terre rare dans un solvant adapté, tel un éther, comme le diéthyléther ou le tétrahydrofurane ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

Selon un mode de réalisation particulièrement préférentiel, le métallocène est de formule (III-1), (III-2), (III-3), (III-4) ou (III-5) :

[Me₂Si(Flu)₂Nd(p-BH₄)₂Li(THF)] (III-1)

[{Me₂SiFlu₂Nd(µ-BH₄)₂Li(THF)}₂] (III-2)

[Me₂SiFlu₂Nd(µ-BH₄)(THF)] (III-3)

[{Me₂SiFlu₂Nd(µ-BH₄)(THF)}₂] (III-4)

[Me₂SiFlu₂Nd(µ-BH₄)] (III-5)

dans laquelle Flu représente le groupe C₁₃H₈.

Un autre constituant de base du système catalytique est le co-catalyseur, un organomagnésien de formule (IV) ou de formule (V),

R^{B}-(Mg-R^{A})ₙ-Mg-R^{B} (IV)

X-Mg-R^{C}-Mg-X (V)

R^{A} étant une chaîne divalente hydrocarbonée aliphatique, interrompue ou non par un ou plusieurs atomes d'oxygène ou de soufre ou bien par un ou plusieurs groupes arylènes,
R^{B} comprenant un noyau benzénique substitué par l'atome de magnésium, l'un des atomes de carbone du noyau benzénique en ortho du magnésium étant substitué par un méthyle, un éthyle, un isopropyle ou formant un cycle avec l'atome de carbone qui est son plus proche voisin et qui est en méta du magnésium, l'autre atome de carbone du noyau benzénique en ortho du magnésium étant substitué par un méthyle, un éthyle ou un isopropyle,
n étant un nombre supérieur ou égal à 1, de préférence égal à 1,
R^{C} étant une chaîne divalente hydrocarbonée aliphatique, interrompue ou non par un ou plusieurs atomes d'oxygène ou de soufre ou bien par un ou plusieurs groupes arylènes,
X étant un atome d'halogène.

Les co-catalyseurs de formule (IV) et (V) ont tous les deux la particularité de comporter deux liaisons magnésium-carbone impliquant des atomes de magnésium distincts. Dans la formule (IV), deux atomes de magnésium partagent chacun une première liaison avec un premier atome de carbone de R^{B} et une deuxième liaison avec un deuxième atome de carbone de R^{A}. Le premier atome de carbone est constitutif du noyau benzénique de R^{B}. Le deuxième atome de carbone est constitutif de la chaîne hydrocarbonée aliphatique R^{A} qui peut contenir au sein de sa chaîne un ou plusieurs hétéroatomes choisis parmi l'oxygène et le soufre ou bien un ou plusieurs groupes arylènes. Dans le cas préférentiel où n est égal à 1, chaque atome de magnésium partage donc une première liaison avec un premier atome de carbone de R^{B} et une deuxième liaison avec un deuxième atome de carbone de R^{A}. Dans la formule (V), chaque atome de magnésium partage donc une première liaison avec un atome d'halogène et une deuxième liaison avec un atome de carbone de R^{C}.

Dans la formule (IV), R^{B} a pour caractéristique de comprendre un noyau benzénique substitué par l'atome de magnésium. Les deux atomes de carbone du noyau benzénique de R^{B} en ortho du magnésium portent un substituant, identique ou différent. Alternativement l'un des deux atomes de carbone du noyau benzénique de R^{B} en ortho du magnésium peut porter un substituant, l'autre atome de carbone du noyau benzénique de R^{B} en ortho du magnésium peut former un cycle. Le substituant est un méthyle, un éthyle ou un isopropyle. Dans le cas où l'un des 2 atomes de carbone du noyau benzénique de R^{B} en ortho du magnésium est substitué par un isopropyle, de préférence le deuxième atome de carbone du noyau benzénique de R^{B} en ortho du magnésium n'est pas substitué par un isopropyle. De préférence, les atomes de carbone du noyau benzénique de R^{B} en ortho du magnésium sont substitués par un méthyle ou un éthyle. De manière plus préférentielle, les atomes de carbone du noyau benzénique de R^{B} en ortho du magnésium sont substitués par un méthyle.

Le composé organomagnésien de formule (IV) répond préférentiellement à la formule (IVa-n) dans laquelle n est supérieur ou égal à 1, R₁ et R₅, identiques ou différents, représentent un méthyle ou un éthyle, de préférence un méthyle, R₂, R₃ et R₄, identiques ou différents, représentent un atome d'hydrogène ou un alkyle et R^{A} est une chaîne divalente hydrocarbonée aliphatique, interrompue ou non par un ou plusieurs atomes d'oxygène ou de soufre ou bien par un ou plusieurs groupes arylènes. De préférence, R₁ et R₅ représentent un méthyle. De préférence, R₂ et R₄ représentent un atome hydrogène.

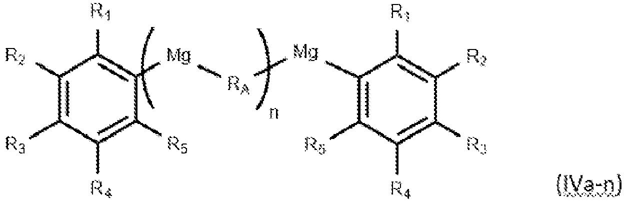

Le composé organomagnésien de formule (IVa-n) est de formule (IVa-1) dans le cas où n est égal à 1.

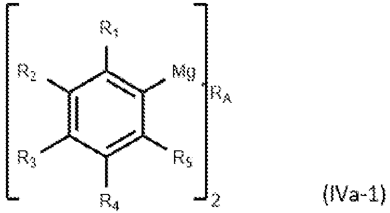

Selon une variante préférentielle, R₁, R₃ et R₅ sont identiques dans la formule (IVa-n), notamment dans la formule (IVa-1). Selon une variante plus préférentielle, R₂ et R₄ représentent un hydrogène et R₁, R₃ et R₅ sont identiques. Dans une variante davantage préférentielle, R₂ et R₄ représentent un hydrogène et R₁, R₃ et R₅ représentent un méthyle.

Dans les formules (IV) et (IVa-n), en particulier dans la formule (IVa-1), R^{A} est une chaîne hydrocarbonée aliphatique divalente qui peut contenir au sein de sa chaîne un ou plusieurs hétéroatomes choisis parmi l'oxygène et le soufre ou bien un ou plusieurs groupes arylènes. De préférence, R^{A} est un alcanediyle, ramifiée ou linéaire, un cycloalcanediyle ou un radical xylènediyle. De manière plus préférentielle, R^{A} est un alcanediyle.

De préférence, R^{A} contient 3 à 10 atomes de carbone, en particulier 3 à 8 atomes de carbone.

De manière encore plus préférentielle, R^{A} est un alcanediyle ayant 3 à 10 atomes de carbone. Avantageusement, R^{A} est un alcanediyle ayant 3 à 8 atomes de carbone. Très avantageusement, R^{A} est un alcanediyle linéaire. Comme groupes R^{A} conviennent tout particulièrement le 1,3-propanediyle, le 1,4-butanediyle, le 1,5-pentanediyle, le 1,6-hexanediyle, le 1,7-heptanediyle, le 1,8-octanediyle.

Selon l'un quelconque des modes de réalisation de l'invention, n est préférentiellement égal à 1 dans la formule (IV), en particulier dans la formule (IVa-n).

Le composé organomagnésien de formule (IV) peut être préparé par un procédé, qui comprend la réaction d'un premier organomagnésien de formule X'Mg-R^{A}-MgX' avec un deuxième organomagnésien de formule R^{B}-Mg-X', X' représentant un atome d'halogène, préférentiellement de brome ou de chlore, R^{B} et R^{A} étant tels que définis précédemment. X' est plus préférentiellement un atome de brome. La stoechiométrie utilisée dans la réaction détermine la valeur de n dans la formule (IV) et dans la formule (IVa). Par exemple un ratio molaire de 0,5 entre la quantité du premier organomagnésien et la quantité du deuxième organomagnésien est favorable à la formation d'un composé organomagnésien de formule (IV) dans laquelle n est égal à 1, alors qu'un ratio molaire supérieur à 0,5 sera davantage favorable à la formation d'un composé organomagnésien de formule (IV) dans laquelle n est supérieur à 1.

Pour mettre en oeuvre la réaction du premier organomagnésien avec le deuxième organomagnésien, on ajoute typiquement une solution du deuxième organomagnésien sur une solution du premier organomagnésien. Les solutions du premier organomagnésien et du deuxième organomagnésien sont généralement des solutions dans un éther, tel que le diéthyléther, le dibutyléther, le tétrahydrofurane, le méthyltétrahydrofurane ou le mélange de deux ou plus de ces éthers. De préférence, les concentrations respectives des solutions du premier organomagnésien et du deuxième organomagnésien sont respectivement de 0,01 à 3 mol/L et de 0,02 à 5 mol/L. De manière plus préférentielle, les concentrations respectives du premier organomagnésien et du deuxième organomagnésien sont respectivement de 0,1 à 2 mol/L et de 0,2 à 4 mol/L.

Le premier organomagnésien et le deuxième organomagnésien peuvent être préparés au préalable par une réaction de Grignard à partir de magnésium métal et d'un précurseur adéquat. Pour le premier organomagnésien et le deuxième organomagnésien, les précurseurs respectifs sont de formule X'-R^{A}-X' et R^{B}-X', R^{A}, R^{B} et X' étant tels que définis précédemment. La réaction de Grignard est mise en oeuvre typiquement par l'ajout du précurseur à du magnésium métal qui se présente généralement sous la forme de copeaux. De préférence, de l'iode (I₂) typiquement sous la forme de bille est introduit dans le réacteur avant l'ajout du précurseur afin d'activer la réaction de Grignard de manière connue.

Alternativement, le composé organomagnésien conforme à l'invention peut être préparé par réaction d'un composé organométallique de formule M-R^{A}-M et de l'organomagnésien de formule R^{B}-Mg-X', M représentant un atome de lithium, de sodium ou de potassium, X', R^{B} et R^{A} étant tels que définis précédemment. De préférence, M représente un atome de lithium, auquel cas l'organométallique de formule M-R^{A}-M est un organolithien.

La réaction de l'organolithien et de l'organomagnésien est conduite typiquement dans un éther tel que le diéthyléther, le dibutyléther, le tétrahydrofurane, le méthyltétrahydrofurane. La réaction est conduite aussi typiquement à une température allant de 0°C à 60°C. La mise en contact est réalisée de préférence à une température comprise entre 0°C et 23°C. La mise en contact du composé organométallique de formule M-R^{A}-M avec l'organomagnésien de formule R^{B}-Mg-X' se fait préférentiellement par l'ajout d'une solution du composé organométallique M-R^{A}-M à une solution de l'organomagnésien R^{B}-Mg-X'. La solution du composé organométallique M-R^{A}-M est généralement une solution dans un solvant hydrocarboné, de préférence n-hexane, cyclohexane ou méthylcyclohexane, la solution de l'organomagnésien R^{B}-Mg-X' est généralement une solution dans un éther, de préférence le diéthyléther ou le dibutyléther. De préférence, les concentrations respectives des solutions du composé organométallique et de l'organomagnésien M-R^{A}-M et R^{B}-Mg-X' sont respectivement de 0,01 à 1 mol/L et de 1 à 5 mol/L. De manière plus préférentielle, les concentrations respectives des solutions du composé organométallique et de l'organomagnésien M-R^{A}-M et R^{B}-Mg-X' sont respectivement de 0,05 à 0,2 mol/L et de 2 à 3 mol/L.

Comme toute synthèse faite en présence de composés organométalliques, les synthèses décrites pour la synthèse des organomagnésiens ont lieu dans des conditions anhydres sous atmosphère inerte, dans des réacteurs agités. Typiquement, les solvants et les solutions sont utilisés sous azote ou argon anhydre.

Une fois l'organomagnésien de formule (IV) est formé, il est récupéré généralement en solution après filtration conduite sous atmosphère inerte et anhydre. Il peut être stocké avant son utilisation dans sa solution dans des récipients hermétiques, par exemple des bouteilles capsulées, à une température comprise entre -25°C et 23°C.

Comme tout composé organomagnésien, le composé organomagnésien de formule (IV) peut se présenter sous la forme d'une entité monomère (R^{B}-(Mg-R^{A})ₙ-Mg-R^{B})₁ ou sous la forme d'une entité polymère (R^{B}-(Mg-R^{A})ₙ-Mg-R^{B})ₚ, p étant un nombre entier supérieur à 1, notamment dimère (R^{B}-(Mg-R^{A})ₙ-Mg-R^{B})₂, n étant comme défini précédemment. Par ailleurs, qu'il soit sous la forme d'une entité monomère ou polymère, il peut également se présenter sous la forme d'une entité coordinée à une ou plusieurs molécules d'un solvant, de préférence d'un éther tel que le diéthyléther, le tétrahydrofurane ou le méthyltétrahydrofurane.

Dans la formule (V), R^{C} est une chaîne hydrocarbonée aliphatique divalente qui peut contenir au sein de sa chaîne un ou plusieurs hétéroatomes choisis parmi l'oxygène et le soufre ou bien un ou plusieurs groupes arylènes. De préférence, R^{C} est un alcanediyle, ramifiée ou linéaire, un cycloalcanediyle ou un radical xylènediyle. De manière plus préférentielle, R^{C} est un alcanediyle.

De préférence, R^{C} contient 3 à 10 atomes de carbone, en particulier 3 à 8 atomes de carbone.

De manière encore plus préférentielle, R^{C} est un alcanediyle ayant 3 à 10 atomes de carbone. Avantageusement, R^{C} est un alcanediyle ayant 3 à 8 atomes de carbone. Très avantageusement, R^{C} est un alcanediyle linéaire. Comme groupes R^{C} conviennent tout particulièrement le 1,3-propanediyle, le 1,4-butanediyle, le 1,5-pentanediyle, le 1,6-hexanediyle, le 1,7-heptanediyle, le 1,8-octanediyle.

Les composés de formule (V) sont des composés bien connus comme réactifs de Grignard. En revanche, ils ne sont pas connus pour être utilisés comme co-catalyseur dans un système catalytique utilisable dans la préparation de polyoléfines. Des réactifs de Grignard de formule (V) sont décrits par exemple dans l'ouvrage « Advanced Organic Chemistry » de J. March, 4th Edition, 1992, page 622-623 ou dans l'ouvrage « Handbook of Grignard Reagents », Edition Gary S. Silverman, Philip E. Rakita, 1996, page 502-503. Ils peuvent être synthétisés par la mise en contact de magnésium métal avec un composé dihalogéné de formule X-R^{C}-X, R^{C} étant tel que défini selon l'invention. Pour leur synthèse, on peut par exemple se référer à la collection de volumes de « Organic Synthesis ».

Comme tout composé organomagnésien, l'organomagnésien de formule (V) peut se présenter sous la forme d'une entité monomère (X-Mg-R^{C}-Mg-X)₁ ou sous la forme d'une entité polymère (X-Mg-R^{C}-Mg-X)ₚ, p étant un nombre entier supérieur à 1, notamment dimère (X-Mg-R^{C}-Mg-X)₂. Par ailleurs, qu'il soit sous la forme d'une entité monomère ou polymère, il peut également se présenter sous la forme d'une entité coordinée à une ou plusieurs molécules d'un solvant, de préférence d'un éther tel que le diéthyléther, le tétrahydrofurane ou le méthyltétrahydrofurane. Dans la formule (V), X est préférentiellement un atome de brome ou de chlore, plus préférentiellement un atome de brome.

Le système catalytique peut être préparé de façon traditionnelle par un procédé analogue à celui décrit dans la demande de brevet WO 2007054224 ou WO 2007054223. Par exemple on fait réagir dans un solvant hydrocarboné le co-catalyseur, en l'espèce l'organomagnésien de formule (IV) ou de formule (V), et le métallocène typiquement à une température allant de 20 à 80°C pendant une durée comprise entre 5 et 60 minutes. Les quantités de co-catalyseur et de métallocène mises en réaction sont telles que le rapport entre le nombre de mole de Mg du co-catalyseur et le nombre de mole de métal de terre rare du métallocène va de préférence de 1 à 200, de manière plus préférentielle de 1 à moins de 20. La plage de valeurs allant de 1 à moins de 20 est notamment plus favorable pour l'obtention de polymères de masses molaires élevées. Le système catalytique est généralement préparé dans un solvant hydrocarboné, aliphatique comme le méthylcyclohexane ou aromatique comme le toluène. Généralement après sa synthèse, le système catalytique est utilisé en l'état dans le procédé de synthèse du polymère conforme à l'invention.

Alternativement, le système catalytique peut être préparé par un procédé analogue à celui décrit dans la demande de brevet WO 2017093654 A1 ou dans la demande de brevet WO 2018020122 A1. Selon cette alternative, le système catalytique contient en outre un monomère de préformation choisi parmi un diène conjugué, l'éthylène ou un mélange d'éthylène et d'un diène conjugué, auquel cas le système catalytique est à base au moins du métallocène, du co-catalyseur et du monomère de préformation. Par exemple on fait réagir dans un solvant hydrocarboné l'organomagnésien et le métallocène typiquement à une température de 20 à 80°C pendant 10 à 20 minutes pour obtenir un premier produit de réaction, puis avec ce premier produit de réaction on fait réagir à une température allant de 40 à 90°C pendant 1h à 12h le monomère de préformation choisi parmi un diène conjugué, l'éthylène ou un mélange d'éthylène et d'un diène conjugué. Le diène conjugué à titre de monomère de préformation est de préférence un 1,3-diène tel que le 1,3-butadiène, l'isoprène ou encore un 1,3-diène de formule CH₂=CR-CH=CH₂, le symbole R représentant une chaîne hydrocarbonée ayant 3 à 20 atomes de carbone, en particulier le myrcène ou le β-farnésène. Le système catalytique ainsi obtenu peut être utilisé de suite dans le procédé de synthèse du polymère conforme à l'invention ou être stocké sous atmosphère inerte, notamment à une température allant de -20°C à la température ambiante (23°C), avant son utilisation dans la synthèse de polymères.

Comme toute synthèse faite en présence de composé organométallique, la synthèse du métallocène, la synthèse de l'organomagnésien et la synthèse du système catalytique ont lieu dans des conditions anhydres sous atmosphère inerte. Typiquement, les réactions sont conduites à partir de solvants et de composés anhydres sous azote ou argon anhydre.

Le système catalytique peut se présenter sous la forme d'une solution lorsqu'il est en présence d'un solvant hydrocarboné. Le solvant hydrocarboné peut être aliphatique comme le méthylcyclohexane ou aromatique comme le toluène. Le solvant hydrocarboné est de préférence aliphatique, de manière plus préférentielle le méthylcyclohexane. Généralement, le système catalytique est stocké sous la forme d'une solution dans le solvant hydrocarboné avant d'être utilisé en polymérisation. On peut parler alors de solution catalytique qui comprend le système catalytique et le solvant hydrocarboné. Le système catalytique comprend de préférence un solvant hydrocarboné. Lorsque le système catalytique est en solution, sa concentration est définie par la teneur en métal de métallocène dans la solution. La concentration en métal de métallocène a une valeur allant préférentiellement de 0,0001 à 0,2 mol/L, plus préférentiellement de 0,001 à 0,03 mol/L.

La polymérisation est conduite de préférence en solution, en continu ou discontinu. Le solvant de polymérisation peut être un solvant hydrocarboné, aromatique ou aliphatique. A titre d'exemple de solvant de polymérisation, on peut citer le toluène et le méthylcyclohexane. Les monomères peuvent être introduits dans le réacteur contenant le solvant de polymérisation et le système catalytique ou inversement le système catalytique peut être introduit dans le réacteur contenant le solvant de polymérisation et les monomères. Les monomères et le système catalytique peuvent être introduits simultanément dans le réacteur contenant le solvant de polymérisation, notamment dans le cas d'une polymérisation en continu. La polymérisation est conduite typiquement dans des conditions anhydres et en l'absence d'oxygène, en présence éventuelle d'un gaz inerte. La température de polymérisation varie généralement dans un domaine allant de 25 à 120°C, préférentiellement 30 à 100°C. Elle est ajustée selon les monomères à polymériser. De préférence, la copolymérisation est conduite à pression constante d'éthylène.

Au cours de la polymérisation de l'éthylène et des 1,3-diènes dans un réacteur de polymérisation, un ajout continu d'éthylène et des 1,3-diènes peut être réalisé dans le réacteur de polymérisation, auquel cas le réacteur de polymérisation est un réacteur alimenté. Ce mode de réalisation est tout particulièrement adapté pour la synthèse de copolymères statistiques.

L'étape de polymérisation permet la préparation d'un polymère qui a la particularité de présenter à chacune de ses extrémités une liaison carbone-magnésium. Elle est suivie d'une étape de fonctionnalisation avec un agent de modification pour conduire à la synthèse du polymère téléchélique conforme à l'invention. L'agent de modification est typiquement un composé connu pour réagir avec un composé ayant une liaison carbone-magnésium. A titre d'agent de modification conviennent en particulier les amines tertiaires, les amines protégées, les dihalogènes, les cétones, les esters, les alcoxysilanes. L'agent de modification est typiquement ajouté au milieu de polymérisation. Le polymère fonctionnalisé peut être récupéré selon les techniques classiques connues de l'homme du métier comme par exemple par précipitation, par évaporation du solvant sous pression réduite ou par stripping à la vapeur d'eau.

Lorsque le polymère téléchélique conforme à l'invention est synthétisé selon le procédé décrit précédemment, il contient au sein de sa chaîne polymère le radical divalent R^{A} ou R^{C} qui sont respectivement constitutifs des co-catalyseurs de formule (IV) et (V). La présence dans la chaîne polymère du radical divalent provenant du co-catalyseur résulte du mécanisme de la réaction de polymérisation qui implique des réactions de transfert de chaîne entre le métal du métallocène et les liaisons carbone magnésium du co-catalyseur. Ainsi, selon un mode de réalisation de l'invention, le polymère téléchélique contient au sein de la chaîne polymère, représentée par la dénomination « POLY » dans la formule (I), un groupe divalent R qui a la même structure chimique que celle des radicaux divalents R^{A} et R^{C} définis précédemment, y compris dans les modes de réalisation préférentiels.

Les caractéristiques précitées de la présente invention, ainsi que d'autres, seront mieux comprises à la lecture de la description suivante des exemples de réalisation de l'invention, donnés à titre illustratif et non limitatif.

### Exemples

### Exemple 1 : préparation d'un co-catalyseur présentant deux liaisons magnésium-carbone impliquant des atomes de magnésium distincts, le 1,5-di(bromure de magnésium)-pentanediyle (DBMP) :

9,72 g de magnésium (400 mmol, 10 équivalents), 80 mL de 2-méthyltétrahydrofurane (MeTHF) (dont 64 mL dans l'ampoule de coulée), 60 mg de diiode (0,23 mmol, 0,006 équivalent) et 5,45 mL de 1,5-dibromopentane (40 mmol, 1 équivalent) ont été utilisés lors de la synthèse. La verrerie utilisée consiste en un ballon de 200 mL et une ampoule de coulée de 100 mL. Une fois la synthèse du réactif de Grignard terminée, la solution est transférée à la canule filtrante dans un second ballon de 200 mL inerté. Cette solution est concentrée sous vide puis diluée dans 55 mL de toluène. La concentration en groupement pentanediyle est estimée à 0,43 mol L⁻¹. Cette huile est non miscible dans le méthylcyclohexane.

Aliquote de l'huile concentrée : ¹H NMR (Toluene-D₈ - 500 MHz - 298 K) δ : ppm = 2,21 (quin, J = 7,2 Hz, « b »), 1,88 (quin, J = 7,0 Hz, « c »), 0,11 (t, J = 7,4 Hz, « a ») ; quin pour quintuplet.

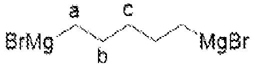

### Exemple 2 : synthèse du bromure de 2-mésitylmagnésium :

4,15 g (170 mmol, 3,4 équivalents) de magnésium sont inertés dans un ballon de 250 mL muni d'une olive aimantée et surmonté d'une ampoule de coulée de 10 mL. Une bille de diiode (10 mg) est introduite sur le magnésium. 47,5 mL de MeTHF sont introduits dans le ballon sous agitation et 2,5 mL sont introduits dans l'ampoule de coulée. 7,65 mL de 2-bromomésitylène (50 mmol, 1 équivalent) dégazés et séchés sur tamis moléculaire activé sont introduits dans l'ampoule de coulée. Le ballon est chauffé à 60 °C et le 2-bromomésitylène est coulé au goutte à goutte sur le magnésium pendant 1 h. L'agitation est maintenue 3 h à 60 °C puis 12 h à 20 °C.

Aliquote de l'huile concentrée en tube de Young : ¹H NMR (C₆D₆ - 400 MHz - 298 K) δ : ppm = 7,01 (s, « a »), 2,74 (s, « b »), 2,36 (s, « c »)

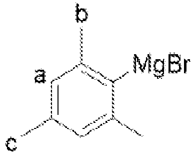

### Synthèse de polymères téléchéliques :

Des copolymères d'éthylène et de butadiène ont été préparés à partir à partir du complexe {(Me₂Si(C₁₃H₈)₂)Nd(-BH₄)[(-BH₄)Li(THF)]}₂ et du co-catalyseur le 1,5-di(bromure de magnésium)-pentanediyle (DBMP) préparé selon le mode opératoire décrit précédemment dans l'exemple 1. Les polymères ont été caractérisées avec les méthodes décrites ci-après.

Chromatographie d'exclusion stérique THF (SEC-THF). Les analyses de chromatographie d'exclusion stérique ont été réalisées avec un appareil Viscotek TDA305 (Malvern Instruments). Cet appareil est équipé de 3 colonnes (SDVB (colonne styrène-divinyle benzène), 5 µm, 300 x 7,5 mm de Polymer Standard Service), d'une colonne de garde et de 3 détecteurs (réfractomètre et viscosimètre différentiels, et diffusion de la lumière).

Le polymère à analyser est solubilisé dans le THF (solvant d'élution) à une concentration de 3 mg mL⁻¹ pour préparer une solution de l'échantillon. 3 mL d'une solution de l'échantillon de concentration 3 mg mL⁻¹ dans le THF sont filtrés sur une membrane PTFE de 0,45 µm. 100 µL de cette solution sont élués dans le THF en utilisant un débit de 1 mL min⁻¹ à une température de 35 °C. Le logiciel OmniSEC est utilisé pour l'acquisition et l'analyse des données. Les masses molaires moyennes en nombre et en masse des polymères synthétisés sont déterminées via un étalonnage dit de Moore en utilisant une courbe de calibration universelle obtenue à partir de polystyrènes standards (Masses molaires au pic *M*ₚ : 1 306 à 2 520 000 g mol⁻¹) de Polymer Standard Service (Mainz). La dispersité est calculée en divisant la masse molaire moyenne en masse (Mw) par la masse molaire moyenne en nombre (Mn).

Résonance magnétique nucléaire (RMN). La spectroscopie RMN haute résolution des polymères a été effectuée sur un spectromètre Bruker 400 Avance III opérant à 400 MHz équipé d'une sonde BBFO 5 mm pour le proton et sur un spectromètre Bruker 400 Avance Il opérant à 400 MHz équipé d'une sonde PSEX ¹³C 10 mm pour le carbone. Les acquisitions sont faites à 363 K. Un mélange de tétrachloroéthylène (TCE) et benzène deutéré (C₆D₆) (2/1 v/v) a été utilisé comme solvant. Les échantillons ont été analysés à une concentration de 1 % en masse pour le proton et 5 % en masse pour le carbone. Les déplacements chimiques sont donnés en ppm, relativement au signal proton du benzène deutéré fixé à 7,16 ppm et au signal du carbone du TCE fixé à 120,65 ppm. La séquence utilisée pour l'acquisition d'un spectre ¹³C d'un polymère est : « Power gate decoupling » (spectre découplé proton avec NOE) avec un angle d'impulsion de 70 °, TD = 64 K et un délai entre les impulsions de 4,5 s. Le nombre d'acquisitions est fixé à 5120.

### Exemple EBR-A :

310 mL de toluène purifié sur colonne d'alumine activée (également dénommée fontaine à solvant) sont introduits dans une bouteille Steinie de 750 mL. Après un barbotage à l'azote d'une dizaine de minutes, 300 mL de toluène sont ainsi récupérés. 46 mg (72 µmol de néodyme) de complexe {(Me₂Si(C₁₃H₈)₂)Nd(-BH₄)[(-BH₄)Li(THF)]}₂ sont pesés dans une bouteille Steinie de 250 mL en boîte à gants. Environ 100 mL du contenu de la bouteille de 750 mL sont transférés dans la bouteille de 250 mL par un système de double aiguille. 2,3 mL de 1,5-di(bromure de magnésium)pentanediyle (DBMP) préparé selon la même méthode que celle décrite dans l'exemple 1 (0,43 mol L⁻¹ dans le toluène) sont introduits dans la bouteille de 250 mL.

100 mL supplémentaires du contenu de la bouteille de 750 mL sont introduits dans un réacteur de 500 mL inerté sous agitation (400 rpm, tours par minute) et chauffé à 77 °C. Le contenu de la bouteille de 250 mL est ensuite transféré dans le réacteur, puis le reste du contenu de la bouteille de 750 mL (environ 100 mL) termine de remplir le réacteur. Le réacteur est dégazé sous vide jusqu'à formation de bulles de gaz, puis pressurisé à 3 bars avec le mélange éthylène/butadiène avec un ratio 80/20 molaire.

Quand la quantité de monomère désirée est consommée, le réacteur est dégazé. La fonctionnalisation est réalisée avec 2 équivalents de 4,4'-bis(diéthylamino)benzophénone (DEAB) par rapport à la quantité totale de magnésium, en solution dans le toluène.

Le milieu est agité 1 h à 77 °C avant d'être refroidi et désactivé avec de l'éthanol. Le polymère est séché sous vide à 50 °C pendant 24 h puis pesé.

Environ 2 g de polymère sont solubilisés dans 20 mL de méthylcyclohexane, puis le polymère est précipité dans environ 150 mL d'acétone. L'opération est répétée 3 fois de suite afin de laver le polymère. Le polymère lavé puis séché est récupéré pour les analyses.

### Exemple EBR-B :

310 mL de toluène provenant de la fontaine à solvants sont introduits dans une bouteille Steinie de 750 mL. Après un barbotage à l'azote d'une dizaine de minutes, 300 mL de toluène sont ainsi récupérés. 46 mg (72 µmol de néodyme) de complexe {(Me₂Si(C₁₃H₈)₂)Nd(-BH₄)[(-BH₄)Li(THF)]}₂ sont pesés dans une bouteille Steinie de 250 mL en boîte à gants. 1 mL de bromure de 2-mésitylmagnésium préparé selon l'exemple 2 (0,5 mol L⁻¹ dans le toluène) est introduit dans la bouteille de 750 mL. Environ 100 mL du contenu de la bouteille de 750 mL sont transférés dans la bouteille de 250 mL par un système de double aiguille. 2,3 mL de 1,5-di(bromure de magnésium)pentanediyle (DBMP) préparé selon la même méthode que celle décrite dans l'exemple 1 (0,43 mol L⁻¹ dans le toluène) sont introduits dans la bouteille de 250 mL.

100 mL supplémentaires du contenu de la bouteille de 750 mL sont introduits dans un réacteur de 500 mL inerté sous agitation (400 rpm) et chauffé à 77 °C. Le contenu de la bouteille de 250 mL est ensuite transféré dans le réacteur, puis le reste du contenu de la bouteille de 750 mL (environ 100 mL) termine de remplir le réacteur. Le réacteur est dégazé sous vide jusqu'à formation de bulles de gaz, puis pressurisé à 3 bars avec le mélange éthylène/butadiène avec un ratio 80/20 molaire. Quand la quantité de monomère désirée est consommée, le réacteur est dégazé. La fonctionnalisation est réalisée avec 2 équivalents de 4,4'-bis(diéthylamino)benzophénone (DEAB) par rapport à la quantité totale de magnésium, en solution dans le toluène.

Le milieu est agité 1 h à 77 °C avant d'être refroidi et désactivé avec de l'éthanol. Le polymère est séché sous vide à 50 °C pendant 24 h puis pesé.

Environ 2 g de polymère sont solubilisés dans 20 mL de méthylcyclohexane, puis le polymère est précipité dans environ 150 mL d'acétone. L'opération est répétée 3 fois de suite afin de laver le polymère. Le polymère lavé puis séché est récupéré pour les analyses.

Les conditions de copolymérisation de l'éthylène et du 1,3-butadiène sont reportées dans le tableau 1.

Les caractéristiques des copolymères synthétisés figurent dans le tableau 2 et dans le tableau 3.

La microstructure des polymères et la fonctionnalisation aux deux extrémités de chaîne du polymère sont déterminées par RMN. Le taux d'unité éthylène, le taux d'unité de 1,3 butadiène sous la configuration 1,2 (unité 1,2), sous la configuration 1,4 (unité 1,4) et le taux d'unité 1,2-cyclohexane (unité cycle) sont exprimés en pourcentage molaire par rapport à l'ensemble des unités du polymère.

### Résultats :

Les résultats montrent que l'utilisation dans la copolymérisation d'éthylène et de 1,3-butadiène d'un système catalytique à base d'un métallocène de terre rare et d'un co-catalyseur qui présente deux liaisons magnésium-carbone impliquant des atomes de magnésium distincts, comme le DBMP, permet la synthèse de polymères téléchéliques selon l'invention. Le polymère est un copolymère d'éthylène et de 1,3-butadiène qui comprend des unités 1,2-cyclohexane dans sa chaîne polymère. Les groupes fonctionnels aux extrémités de chaîne du polymère sont identiques. La macrostructure des polymères est bien définie par une dispersité inférieure à 1,5 ou par une masse molaire moyenne en nombre supérieure à 10 000 g/mol.

**Tableau 1**

| Polymère | Co-catalyseur | Ratio molaire Mg/Nd | Durée (min) |
|---|---|---|---|
| EBR-A | DBMP | 28 | 127 |
| EBR-B | DBMP | 35 | 110 |

**Tableau 2**

| Polymère | M, SEC (g mol⁻¹) | D | Extrémités de chaîne |
|---|---|---|---|
| EBR-A | 8470 | 1,18 | [N(CH₂CH₃)₂] |
| EBR-B | 13520 | 1,18 | [N(CH₂CH₃)₂] |

**Tableau 3**

| Polymère | Unité éthylène | Unité 1,2 | Unité 1,4 | Unité Cycle |
|---|---|---|---|---|
| EBR-A | 79,3 | 5,1 | 4,1 | 11,5 |
| EBR-B | 80,8 | 4,2 | 3,5 | 11,5 |

## Revendications

1. Polymère téléchélique de formule (I)
Z₁-POLY-Z₂ (I)
dans laquelle la dénomination « POLY » désigne une chaîne polymère comprenant des unités d'un 1,3-diène, des unités d'éthylène et des unités cycliques, unités 1,2-cyclohexane de formule (II), 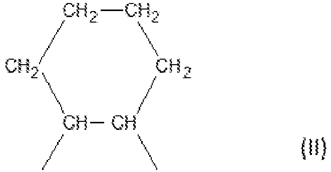
Z₁ et Z₂ désignant un groupe contenant une fonction,
Z₁ et Z₂ étant identiques,
lequel polymère présente une macrostructure définie par une dispersité inférieure à 1,5 ou par une masse molaire moyenne en nombre supérieure à 10 000 g/mol.

2. Polymère téléchélique selon la revendication 1 dans lequel la chaîne polymère est une chaîne copolymère du 1,3-diène et d'éthylène ou une chaîne terpolymère du 1,3-diène, d'éthylène et d'une α-monooléfine.

3. Polymère téléchélique selon l'une quelconque des revendications 1 à 2 dans lequel le 1,3-diène est le 1,3-butadiène ou un mélange de 1,3-diènes dont un est le 1,3-butadiène.

4. Polymère téléchélique selon l'une quelconque des revendications 1 à 3 dans lequel la chaîne polymère contient plus de 50% en mole d'unités éthylène.

5. Polymère téléchélique selon l'une quelconque des revendications 1 à 4 dans lequel la chaîne polymère contient au plus 15% en mole d'unité 1,2-cyclohexane.

6. Polymère téléchélique selon l'une quelconque des revendications 1 à 5 dans lequel la chaîne polymère est une chaîne copolymère statistique.

7. Polymère téléchélique selon l'une quelconque des revendications 1 à 6 dans lequel Z₁ et Z₂ désignent un groupe comprenant une fonction alcool, amine, halogène, carbonyle, alcoxysilane, silanol.

8. Polymère téléchélique selon l'une quelconque des revendications 1 à 7, dans lequel la macrostructure est définie par une masse molaire moyenne en nombre supérieure à 10 000 g/mol, préférentiellement supérieure à 20 000 g/mol, telle que déterminée selon la méthode décrite dans la description.

9. Polymère téléchélique selon la revendication 8 dans lequel la macrostructure est définie par une dispersité inférieure à 1,5.

10. Polymère téléchélique selon l'une quelconque des revendications 1 à 9, lequel polymère contient au sein de la chaîne polymère « POLY » un groupe divalent R, chaîne hydrocarbonée aliphatique, interrompue ou non par un ou plusieurs atomes d'oxygène ou de soufre ou bien par un ou plusieurs groupes arylènes et R étant différent d'une unité éthylène, d'une unité d'un 1,3-diène, d'un enchaînement d'unités éthylène, d'un enchaînement d'unités d'un 1,3-diène, d'un enchaînement d'unités constituées d'une ou plusieurs unité éthylène et d'une ou plusieurs unités d'un 1,3-diène.

11. Polymère téléchélique selon la revendication 10 dans lequel le groupe divalent R est un alcanediyle, ramifiée ou linéaire, un cycloalcanediyle ou un radical xylènediyle.

12. Polymère téléchélique selon l'une quelconque des revendications 10 à 11 dans lequel le groupe divalent R est un alcanediyle.

13. Polymère téléchélique selon l'une quelconque des revendications 10 à 12 dans lequel le groupe divalent R contient 3 à 10 atomes de carbone.

## Patentansprüche

1. Telechel-Polymer nach Formel (I)
Z₂-POLY-Z₂ (I)
wobei der Begriff "POLY" eine Polymerkette bezeichnet, die 1,3-Dien-Einheiten, Ethylen-Einheiten und zyklische Einheiten, nämlich 1,2-Cyclohexan-Einheiten nach Formel (II) umfasst, 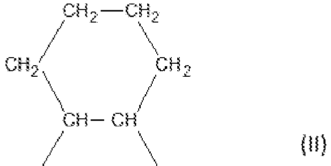
wobei Z₁ und Z₂ eine Gruppe bezeichnen, die einen funktionellen Baustein enthält,
wobei Z₁ und Z₂ identisch sind,
wobei das Polymer eine Makrostruktur aufweist, die durch eine Dispersität von weniger als 1,5 oder durch ein Zahlenmittel der Molmasse von mehr als 10.000 g/mol festgelegt ist.

2. Telechel-Polymer nach Anspruch 1, wobei es sich bei der Polymerkette um eine Copolymerkette aus dem 1,3-Butadien und Ethylen oder um eine Terpolymerkette aus dem 1,3-Dien, Ethylen und einem α-Monoolefin handelt.

3. Telechel-Polymer nach einem beliebigen der Ansprüche 1 bis 2, wobei es sich bei dem 1,3-Dien um 1,3-Butadien oder eine um Mischung aus 1,3-Dienen handelt, von welchen eines 1,3-Butadien ist.

4. Telechel-Polymer nach einem beliebigen der Ansprüche 1 bis 3, wobei die Polymerkette mehr als 50 Mol-% an Ethylen-Einheiten enthält.

5. Telechel-Polymer nach einem beliebigen der Ansprüche 1 bis 4, wobei die Polymerkette höchstens 15 Mol-% an 1,2-Cyclohexan-Einheiten enthält.

6. Telechel-Polymer nach einem beliebigen der Ansprüche 1 bis 5, wobei es sich bei der Polymerkette um eine statistische Copolymerkette handelt.

7. Telechel-Polymer nach einem beliebigen der Ansprüche 1 bis 6, wobei Z₁ und Z₂ eine Gruppe bezeichnen, die einen funktionellen Alkohol-, Amin-, Halogen-, Carbonyl-, Alkoxysilan-, Silanolbaustein umfasst.

8. Telechel-Polymer nach einem beliebigen der Ansprüche 1 bis 7, wobei die Makrostruktur durch ein Zahlenmittel der Molmasse von mehr als 10.000 g/mol, vorzugsweise von mehr als 20.000 g/mol festgelegt ist, wobei dessen Bestimmung gemäß der Methode erfolgt, welche in der Beschreibung dargelegt ist.

9. Telechel-Polymer nach Anspruch 8, wobei die Makrostruktur durch eine Dispersität von weniger als 1,5 festgelegt ist.

10. Telechel-Polymer nach einem beliebigen der Ansprüche 1 bis 9, wobei das Polymer innerhalb der "POLY"-Polymerkette eine zweibindige Gruppe R enthält, wobei es sich um eine aliphatische Kohlenwasserstoffkette handelt, die von einem oder mehreren Sauerstoff- oder Schwefelatomen oder von einer oder mehreren Arylengruppen unterbrochen sein kann, aber nicht muss, wobei R sich weiterhin von einer Ethylen-Einheit, von einer 1,3-Dien-Einheit, von einer Abfolge von Ethylen-Einheiten, von einer Abfolge von 1,3-Dien-Einheiten, von einer Abfolge von Einheiten unterscheidet, welche aus einer oder mehreren Ethylen-Einheiten und aus einer oder mehreren 1,3-Dien-Einheiten bestehen.

11. Telechel-Polymer nach Anspruch 10, wobei es sich bei der zweibindigen Gruppe R um ein Alkandiyl verzweigter oder geradkettiger Art, ein Cycloalkandiyl oder einen Xylendiyl-Rest handelt.

12. Telechel-Polymer nach einem beliebigen der Ansprüche 10 bis 11, wobei die zweibindige Gruppe R ein Alkandiyl ist.

13. Telechel-Polymer nach einem beliebigen der Ansprüche 10 bis 12, wobei die zweibindige Gruppe R 3 bis 10 Kohlenstoffatome enthält.

## Claims

1. Telechelic polymer of formula (I)
Z₁-POLY-Z₂ (I)
in which the term "POLY" denotes a polymer chain comprising units of a 1,3-diene, ethylene units and cyclic units, 1,2-cyclohexane units of formula (II), 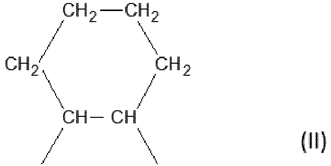
Z₁ and Z₂ denoting a group containing a function,
Z₁ and Z₂ being identical,
which polymer has a macrostructure defined by a dispersity of less than 1.5 or by a number-average molar mass of greater than 10 000 g/mol.

2. Telechelic polymer according to Claim 1, in which the polymer chain is a copolymer chain of a 1,3-diene and ethylene or a terpolymer chain of a 1,3-diene, ethylene and an α-monoolefin.

3. Telechelic polymer according to either of Claims 1 and 2, in which the 1,3-diene is 1,3-butadiene or a mixture of 1,3-dienes, one of which is 1,3-butadiene.

4. Telechelic polymer according to any one of Claims 1 to 3, in which the polymer chain contains more than 50 mol% of ethylene units.

5. Telechelic polymer according to any one of Claims 1 to 4, in which the polymer chain contains not more than 15 mol% of 1,2-cyclohexane units.

6. Telechelic polymer according to any one of Claims 1 to 5, in which the polymer chain is a statistical copolymer chain.

7. Telechelic polymer according to any one of Claims 1 to 6, in which Z₁ and Z₂ denote a group comprising an alcohol, amine, halogen, carbonyl, alkoxysilane or silanol function.

8. Telechelic polymer according to any one of Claims 1 to 7, in which the macrostructure is defined by a number-average molar mass of greater than 10 000 g/mol, preferentially greater than 20 000 g/mol, as determined according to the method described in the description.

9. Telechelic polymer according to Claim 8, in which the macrostructure is defined by a dispersity of less than 1.5.

10. Telechelic polymer according to any one of Claims 1 to 9, which polymer contains within the polymer chain "POLY" a divalent group R, an aliphatic hydrocarbon-based chain, interrupted or not with one or more oxygen or sulfur atoms or one or more arylene groups, R being other than an ethylene unit, a 1,3-diene unit, a chain of ethylene units, a chain of 1,3-diene units, a chain of units consisting of one or more ethylene units and one or more 1,3-diene units.

11. Telechelic polymer according to Claim 10, in which the divalent group R is a branched or linear alkanediyl, a cycloalkanediyl or a xylenediyl radical.

12. Telechelic polymer according to either of Claims 10 and 11, in which the divalent group R is an alkanediyl.

13. Telechelic polymer according to any one of Claims 10 to 12, in which the divalent group R contains from 3 to 10 carbon atoms.
